Europäisches Patentamt

European Patent Office

Office européen des brevets

(11) Publication number: **0 418 998 A1**

# EUROPEAN PATENT APPLICATION

(21) Application number: 90305236.3

(22) Date of filing: 15.05.90

(51) Int. Cl.⁵: **B64C 29/00**

The title of the invention has been amended (Guidelines for Examination in the EPO, A-III, 7.3).

(30) Priority: 28.08.89 JP 218689/89

(43) Date of publication of application:
27.03.91 Bulletin 91/13

(84) Designated Contracting States:
AT DE FR GB IT NL SE

(71) Applicant: **AREX ELECTRONICS CORPORATION**
2-6, 3-chome, Akasaka
Minato-ku Tokyo(JP)

(72) Inventor: **Hatanaka, Takefumi**
**No. 1-4-14, Midori-cho**
**Koganei-shi, Tokyo(JP)**

(74) Representative: **Lawson, David Glynne et al**
**MARKS & CLERK 57-60 Lincoln's Inn Fields**
**London WC2A 3LS(GB)**

(54) **Compact vertical take-off and landing aircraft.**

(57) A vertical take-off and landing aircraft which can be of basically very simple construction and compact size includes an air flow chamber (20) and an impulsion device such as an engine-driven propeller (22) for driving a high-velocity air flow through the air flow chamber (20). The high-velocity air flow can be directed to flow across the upper surfaces of the aircraft wings (16), to thereby generate dynamic lift during take-off or landing operation, and can be directed to flow out from the rear of the aircraft fuselage (12) to produce propulsive force during normal forward flying operation.

Fig. I

# VERTICAL TAKE-OFF AND LANDING AIRCRAFT CAPABLE OF IMPLEMENTATION IN COMPACT FORM

## BACKGROUND OF THE INVENTION

### Field of Applicable Technology

The present invention relates to a vertical take-off and landing (hereinafter abbreviated to VTOL) aircraft, and in particular to a VTOL aircraft which can readily be made of compact size, can have the simplicity of operation of an automobile, and is capable of take-off or landing operations by utilizing small areas such as gardens, rooftops, roads, public squares, etc.

### Prior Art Technology

In the prior art, the tilt-rotor type of VTOL aircraft has been put into practical operation. With such an aircraft, tiltable rotors are mounted on the main wings. As a result, the overall size of the aircraft must necessarily be comparatively large, while the manufacturing cost is high.

## SUMMARY OF THE INVENTION

According to the present invention, there is provided a vertical take-off and landing aircraft comprising a fuselage, main wings connected to said fuselage, an air flow chamber formed in said fuselage, and air impulsion means disposed within said air flow chamber; in which said air flow chamber comprises side deflector means which can be selectively opened and closed, and in which said side deflector means are set in an open condition during take-off or landing operation of said aircraft whereby a high-velocity flow of air produced by said air impulsion means is directed to flow across an upper surface of said main wings to thereby generated dynamic lift.

## BRIEF DESCRIPTION OF THE DRAWINGS

Fig. 1 is a plan external view of a preferred embodiment of a VTOL aircraft according to the present invention;
Fig. 2 is an external side view of the embodiment of Fig. 1; and
Fig. 3 is a cross-sectional view in elevation taken along line III - III in Fig. 1, showing an air flow chamber and associated components.

## DESCRIPTION OF PREFERRED EMBODIMENTS

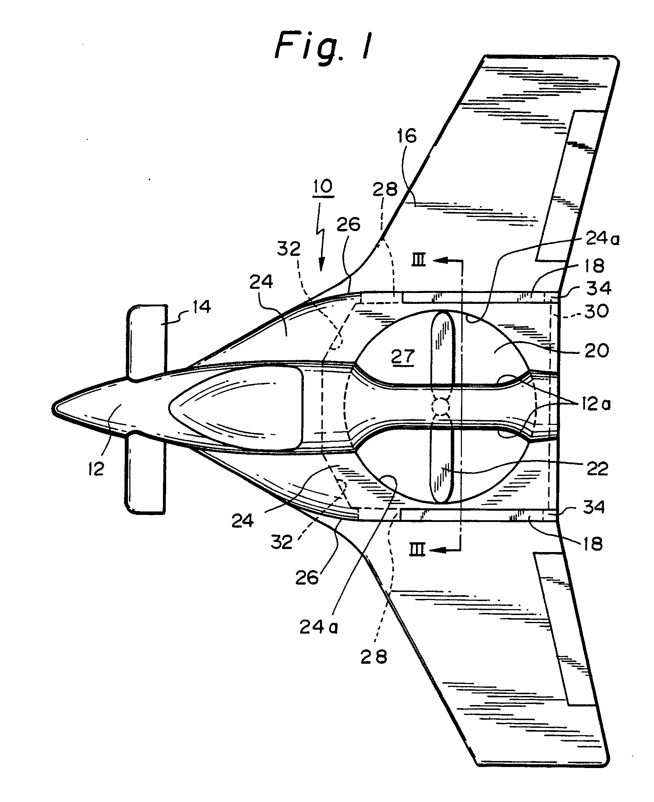

Fig. 1 is a plan external view of a preferred embodiment of a VTOL aircraft according to the present invention, designated by numeral 10. The aircraft 10 is formed of a fuselage 12, a pair of canard wings 14 which are mounted on the fuselage near the nose of the aircraft, main wings 16 which are mounted towards the rear end of the fuselage 12, and a pair of vertical stabilizers 18. An air flow chamber 20 is formed in a portion of the fuselage 12 that is centered on the longitudonal axis of the main wings 16, and is positioned above the main wings 16. Within the air flow chamber 20 is mounted a propeller 22 which executes air impulsion. It should be understood that the invention is not limited to the use of such a propeller, and it would be also possible to utilize a fan impeller for this function. The drive shaft of the propeller 22 is disposed perpendicular to the longitudonal axis of the fuselage 12. The air flow chamber 20 has upper walls 24 and side walls 26, which respectively extend from the front edges to the trailing edges of the main wings 16.

Cut-out regions 12a and 24a are respectively formed in a rear portion of the fuselage 12 and in the upper walls 24, whereby an air inlet 27 is formed. Side deflectors 28 which can be selectively opened and closed are provided at opposing sides of the air flow chamber 20, while a rear deflector 30 which can also be selectively opened and closed is provided at the rear of the air flow chamber 20.

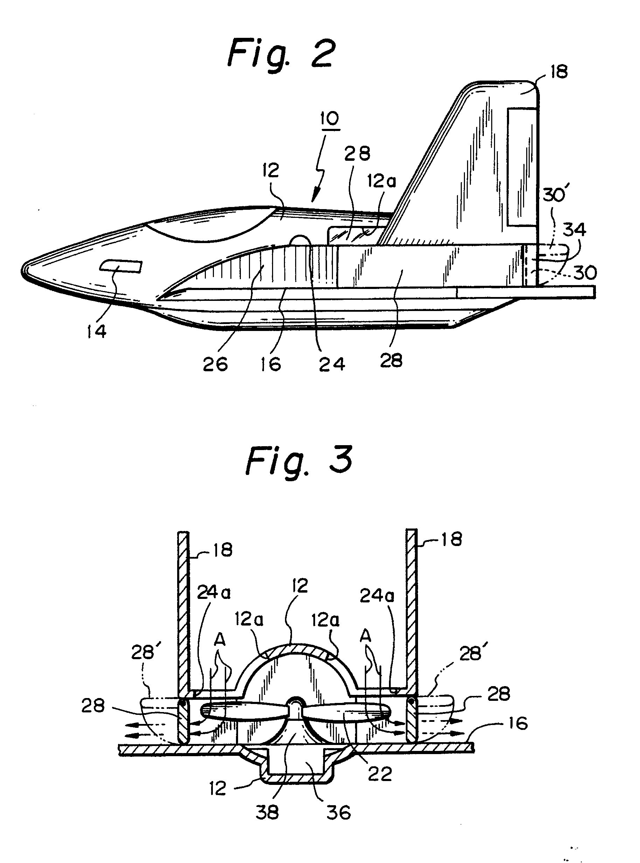

As indicated in Figs. 1 and 2, the air flow chamber 20 has an inner wall 32 which extends substantially parallel to the leading edges of the main wings 16. Numeral 34 denotes a reinforcing panel which is disposed between the upper walls 24 and the main wings 16.

As shown in Fig. 3, the propeller 22 is driven by an engine 36 which is mounted in the fuselage 12, with a cone-shaped member 38 being formed over the upper part of the engine 36 to prevent disturbance of the air flow within the air flow chamber 20.

The operation of this embodiment is as follows. During take-off operation, as shown in Figs. 1 and 2 the rear deflector 30 is held in the closed position, while the side deflectors 28 are each held in the open position as indicated by the chain-line outlines 28' in Fig. 3. When the engine 36 is set in operation in this condition, an air flow A is generated and flows parallel to the rotational axis of the propeller 22, to be then directed to flow across the upper surfaces of the main wings 16. Dynamic lift is thereby generated as a result of a pressure differential which is produced between the upper and lower surfaces of the main wings 16. Take-off by the aircraft is thereby achieved. The side deflectors 28 are then closed, and the rear deflector 30 is set to the open position (indicated by the chain-line outline 30' in Fig. 2), whereby the high-velocity air flow from the air flow chamber 20 passes out from the rear of the fuselage 12, thereby applying a forward propulsive force to the aircraft 10.

When landing of the aircraft is to be executed, the rear deflector 30 is set in the closed condition and the side deflectors 28 are set in the open condition shown in Fig. 3. The side deflectors 28 are then gradually closed, thereby gradually reducing the amount of dynamic lift that is generated by air flow across the main wings 16, and thus achieve a soft landing by the aircraft.

With the above embodiment of the present invention, the propeller 22 used for air impulsion serves both for generating dynamic lift during take=off or landing and also for forward propulsion of the aircraft. However it would be equally possible to use the propeller 22 only for generating dynamic lift during take-off or landing, and to provide a separate device for executing forward propulsion of the aircraft, such as an external propeller that is driven by the engine 36 cr by a separate engine.

Furthermore it would be equally possible to provide means for extending the main wing area during take-off or landing operation, in order to temporarily achieve increased dynamic lift.

It can be understood from the above that a VTOL aircraft according to the present invention can have a simple configuration, can be made compact in size and light in weight (particularly if recently developed materials which possess high strength in conjunction with low density are utilized in the construction), and could be manufactured at low cost. It can further be understood that such an aircraft could be made extremely simple to operate, and so could in future become a replacement for the automobile as a general-use passenger vihicle.

## Claims

1. A vertical take-off and landing aircraft comprising a fuselage, main wings connected to said fuselage, an air flow chamber formed in said fuselage, and air impulsion means disposed within said air flow chamber;
in which said air flow chamber comprises side deflector means which can be selectively opened and closed, and in which said side deflector means are set in an open condition during take-off or landing operation of said aircraft whereby a high-velocity flow of air produced by said air impulsion means is directed to flow across an upper surface of said main wings to thereby generated dynamic lift.

2. A vertical take-off and landing aircraft according to claim 1, in which said air flow chamber is formed above said main wings.

3. A vertical take-off and landing aircraft according to claim 2, and further in which said air flow chamber comprises rear deflector means, operable to be selectively set in an open and a closed condition, and in which said high-velocity air flow is directed to flow outward in a rearward direction from said fuselage when said rear deflector means is set in said open condition with said side deflector means set in said closed condition thereof.

4. A vertical take-off and landing aircraft according to claim 3, in which said air impulsion means comprises a propeller.

# Fig. 1

# Fig. 2

# Fig. 3

## DOCUMENTS CONSIDERED TO BE RELEVANT

EP 90305236.3

| Category | Citation of document with indication, where appropriate, of relevant passages | Relevant to claim | CLASSIFICATION OF THE APPLICATION (Int. Cl.5) |
|---|---|---|---|
| A | DE - A1 - 3 735 918 (SINDERMANN) * Totality * | 1,4 | B 64 C 29/00 |
| A | DE - A1 - 2 924 504 (GENERAL ELECTRIC CO.) * Fig. 1 * | 1 | |
| A | DD - A - 156 957 (MARKER) * Totality * | 1,4 | |
| A | US - A - 4 726 546 (DE ANGELIS) * Fig. 1-3 * | 1 | |
| A | AT - B - 304 274 (FIMML) * Totality * | 1 | |

TECHNICAL FIELDS SEARCHED (Int. Cl.5)

B 64 C 29/00
B 64 C 39/00
B 64 D 27/00
B 64 C 15/00

The present search report has been drawn up for all claims

| Place of search | Date of completion of the search | Examiner |
|---|---|---|
| VIENNA | 16-10-1990 | HUBER |

EPO FORM 1503 03.82 (P0401)